# EUROPÄISCHE PATENTSCHRIFT

(11) **EP 0 812 787 B1**
(45) Veröffentlichungstag und Bekanntmachung des Hinweises auf die Patenterteilung: **18.12.2002**
(21) Anmeldenummer: 97106240.1
(22) Anmeldetag: 16.04.1997
(51) Int. Cl.: B65G 33/06, H05K 13/02

(54) **Verfahren und Vorrichtung zum Ausrichten von Schrumpfkappen für Temperaturwächter**
Method and device for aligning shrinkable caps for temperature controllers
Méthode et dispositif pour aligner des bonnets rétractables pour thermocontrôleurs

(30) Priorität: 13.06.1996 DE 19623572
(43) Veröffentlichungstag der Anmeldung: 17.12.1997
(73) Patentinhaber: Erbengemeinschaft Peter Hofsäss: Hofsäss, U. Hofsäss, M.P. Hofsäss, D.P. Hofsäss, H.P. Hofsäss, C.R. Hofsäss, B.M., 75181 Pforzheim (DE)
(72) Erfinder: Hofsäss, Peter, verstorben (DE)
(74) Vertreter: Otten, Hajo, Dr.-Ing.

(56) Entgegenhaltungen:
- EP-A- 0 429 669
- US-A- 3 913 798
- US-A- 4 550 820

## Beschreibung

Die vorliegende Erfindung betrifft eine Vorrichtung, in der sowie ein Verfahren, bei dem ungeordnet vorliegende Schrumpfkappen für Temperaturwächter automatisch zugeführt und ausgerichtet werden.

Derartige Temperaturwächter werden heute überall dort eingesetzt, wo elektrische Geräte oder Bauteile vor zu hohen Temperaturen oder zu hohen Strömen geschützt werden müssen. Die Temperaturwächter haben z.B. ein zweiteiliges Metallgehäuse oder ein Gehäuse, an dem außenliegende Anschlußkontakte vorgesehen sind. An die beiden Teile des Metallgehäuses oder die Anschlußkontakte werden Litzen, Laschen etc. angelötet oder befestigt, um den so konfektionierten Temperaturwächter an das zu überwachende Gerät anschließen zu können.

Aus Gründen der Betriebssicherheit und/oder des Schutzes von Personen ist es häufig erforderlich, die mit den Anschlußelementen versehenen Temperaturwächter mit einem Schrumpfschlauch zu überziehen, aus dem nach dem durch Erhitzen vollzogenen Aufschrumpfen nur noch die Litzen, Kontaktbleche o.ä. herausragen.

Bei der Anmelderin der vorliegenden Erfindung werden zu diesem Zweck Hütchen oder Kappen aus Schrumpfschlauchmaterial bereitgestellt, die ungeordnet in Vorratsbehältern als Schüttgut zwischengelagert werden. Die mit den Anschlußelementen vorkonfektionierten Temperaturwächter werden zu mehreren parallel nebeneinander in einen Halter so eingelegt, daß sie an den Anschlußelementen gehalten werden und mit ihren Gehäusen vor den Halter vorstehen. Danach wird von Hand auf jedes Gehäuse eine Schrumpfkappe aufgeschoben. Sind alle Temperaturwächter eines Halters mit Schrumpfkappen versehen, erfolgt das Aufschrumpfen in einer speziellen Vorrichtung.

Bei diesem Verfahren ist von Vorteil, daß die Schrumpfkappen als Schüttgut vorrätig gehalten werden können, und daß in der dazu vorgesehenen Vorrichtung auf mehrere Temperaturwächter gleichzeitig, also parallel, Schrumpfkappen aufgeschrumpft werden können. Von Nachteil ist jedoch, daß die ungeordnet vorliegenden Schrumpfkappen von Hand auf die Temperaturwächter aufgeschoben werden müssen, was einen großen Kostenfaktor bei der gesamten Fertigung der bekannten Temperaturwächter darstellt.

In den der Öffentlichkeit nicht zugänglichen Räumen der Anmelderin wird auch ein Verfahren durchgeführt, bei dem kurze Stücke von einem endlosen Schrumpfschlauch abgelängt und an einer Seite verpreßt/verschweißt werden, so daß eine Schrumpfkappe entsteht. Jede einzelne Schrumpfkappe wird dann automatisch auf einen zugeführten Temperaturwächter aufgeschoben und in einem nächsten Arbeitsschritt aufgeschrumpft.

Bei diesem seriellen Verfahren ist von Nachteil, daß es zum einen sehr langsam ist, also wegen der großen Produktionszeit höhere Kosten mit sich bringt. Ferner ist von Nachteil, daß die Schrumpfkappen nicht vorproduziert oder zwischengelagert werden können, sie müssen immer dann hergestellt werden, wenn die Temperaturwächter mit Schrumpfschläuchen versehen werden sollen.

Ein weiterer Nachteil liegt bei diesem, bisher nur in den Räumen der Anmelderin ausgetesteten Verfahren darin, daß Temperaturwächter mit unterschiedlichen Geometrien verschiedene Halter benötigen können, wobei ggf. wegen der mechanischen und/oder thermischen Belastbarkeit auch unterschiedliches Schrumpfschlauchmaterial verwendet werden muß. Daraus folgt, daß bei dem seriellen Verfahren für jede Temperaturwächtervariante eine eigene Maschine vorrätig gehalten werden muß, an der Schrumpfschlauch zugeführt, abgelängt, an einem Ende verschweißt, aufgesteckt und aufgeschrumpft wird. Derartige Maschinen sind jedoch sehr kostenintensiv, so daß das serielle Verfahren auch aus diesen Gründen große Nachteile mit sich bringt.

Bisher sind im Stand der Technik keine Verfahren oder Vorrichtungen bekannt, mit denen vorgefertigte, ungeordnet vorliegende Schrumpfkappen so ausgerichtet werden können, daß sie danach für die Endfertigung von Temperaturwächtern mittels automatischer Handhabungsmaschinen verwendet werden können. Dies liegt insbesondere daran, daß die vorgefertigten Schrumpfkappen ein sehr geringes Gewicht aufweisen, mechanisch nicht sehr stabil sind und darüber hinaus weder regelmäßige noch wiederkehrende, identische Formen aufweisen. Derartige Schrumpfkappen lassen sich als Massenprodukte nur sehr schwer sortieren und so ausrichten, daß sie mit ihren Öffnungen alle in die gleiche Richtung zeigen, so daß mehrere nebeneinander, also zeitgleich, auf Temperaturwächter aufgeschoben werden können.

Aus der US-A-4 550 820 ist eine Vorrichtung bekannt, mit deren Hilfe kegelstumpfförmige Kunststoffbecher oder andere Behälter mit einer derartigen Form ausgerichtet werden können. Von einer abschüssigen Rampe herabfallend schlagen die Becher an einem Anschlag an, der von dem Ende der Rampe durch einen Spalt getrennt ist. Dieser ist so bemessen, daß die Becher nur in paralleler Ausrichtung zu dem Spalt durch diesen hindurchfallen können. Die hindurchgefallenen Becher werden dann von zwei beabstandet zueinander angeordneten Förderbändern seitlich ergriffen und mitgenommen.

Vor diesem Hintergrund ist es Aufgabe der vorliegenden Erfindung, ein Verfahren sowie eine Vorrichtung von der eingangs genannten Art zu schaffen, um bei geringem konstruktivem Aufwand vorgefertigte Schrumpfkappen automatisch zuführen und ausrichten zu können.

Zur Lösung dieser Aufgabe wird eine Vorrichtung bereitgestellt, in der ungeordnet vorliegende Schutzkappen für Temperaturwächter automatisch zugeführt und ausgerichtet werden, mit einer Zuführeinrichtung zum Zuführen ungeordneter Schrumpfkappen zu einer Ausrichtstrecke, in der die zugeführten Schrumpfkappen so ausgerichtet werden, daß sie dicht an dicht hintereinander liegen und mit ihren spitzen Enden in eine Richtung zeigen, wobei die Ausrichtstrecke zwei parallel zueinander angeordnete und zwischen sich einen Spalt ausbildende Rollen umfaßt, die sich gegensinnig von unten in den Spalt hineinlaufend drehen, der so bemessen ist, daß die Schrumpfkappen nicht von sich aus hindurchfallen, mit ihren Spitzen jedoch hineinpassen, und wobei die Zuführeinrichtung die ungeordneten Schrumpfkappen den Rollen an ihrem einen Ende von oben im Bereich des Spaltes zuführt.

Die der Erfindung zugrunde liegende Aufgabe wird auf diese Weise vollkommen gelöst. Der Erfinder der vorliegenden Anmeldung hat nämlich erkannt, daß es möglich ist, eine Ausrichtstrecke zu schaffen, der Schrumpfkappen ungeordnet zugeführt werden können, und die dennoch in der Lage ist, die Schrumpfkappen so auszurichten, daß sie dicht an dicht hintereinander liegen und mit ihren spitzen Enden in eine Richtung zeigen. Dies wird durch die beiden, sich gegensinnig drehenden Rollen realisiert, die zwischen sich einen Spalt begrenzen. Der Erfinder hat erkannt, daß dadurch, daß die Rollen sich sozusagen von unten in den Spalt hineindrehen, die ungeordnet vorliegenden Schrumpfkappen so lange immer wieder aus dem Spalt hochgeschleudert werden, bis sie mit ihren spitzen Enden in den Spalt weisend angeordnet sind. Auch in dieser Ausrichtung "hüpfen" die Schrumpfkappen noch in dem Spalt auf und ab, sie ändern ihre Orientierung jedoch nicht mehr. Die ausgerichteten Schrumpfkappen können dann z.B. geeignet entnommen und auf Temperaturwächter aufgesteckt werden. Die Schrumpfkappen können aber auch auf verschiedene Weisen längs der Rollen fortbewegt werden, es ist z.B. möglich, einen leichten, stromabwärts gerichteten Luftstrom an den Rollen vorbeistreichen zu lassen, durch den die Schrumpfkappen weiterbewegt werden.

Erfindungsgemäß wird ferner ein Verfahren geschaffen, bei dem ungeordnet vorliegende Schrumpfkappen für Temperaturwächter automatisch zugeführt und ausgerichtet werden, wobei das Verfahren die Schritte aufweist:
a) Zuführen der noch ungeordneten Schrumpfkappen zu einer Ausrichtstrecke, und
b) Ausrichten der Schrumpfkappen in der Ausrichtstrecke, so daß sie dicht an dicht hintereinander liegen und mit ihren spitzen Enden in eine Richtung zeigen,
wobei die Schrumpfkappen an einem Ende von zwei parallel zueinander angeordneten und zwischen sich einen Spalt ausbildenden Rollen zugeführt werden, der so bemessen ist, daß die Schrumpfkappen nicht von sich aus hindurchfallen, mit ihren spitzen Enden jedoch hineinpassen, wobei die Rollen gegensinnig von unten in den Spalt hineinlaufend gedreht werden.

Auch durch dieses Verfahren wird die der Erfindung zugrunde liegende Aufgabe vollkommen gelöst, wie dies oben im Zusammenhang mit der neuen Vorrichtung bereits ausführlich beschrieben wurde.

Bei der neuen Vorrichtung ist es bevorzugt, wenn die Rollen zwischen ihrem oberen und ihrem unteren Ende geneigt verlaufen.

Hier ist von Vorteil, daß sich die Schrumpfkappen sozusagen automatisch längs der Rollen stromabwärts bewegen, ohne daß zusätzliche Energie, z.B. in Form eines Luftstromes, zugeführt werden muß. Der Erfinder der vorliegenden Anmeldung hat nämlich erkannt, daß eine leichte Neigung der beiden parallel zueinander verlaufenden und sich gegensinnig zueinander drehenden Rollen ausreicht, um nicht nur für ein automatisches Ausrichten sondern gleichzeitig noch für einen Transport der Schrumpfkappen längs der Rollen zu sorgen. Diese Maßnahme ist also insbesondere konstruktiv von Vorteil.

In einer Weiterbildung ist es bevorzugt, wenn sich an die Ausrichtstrecke eine Positioniereinrichtung anschließt, in der die ausgerichteten Schrumpfkappen vereinzelt und in einem bestimmten Abstand zueinander angeordnet werden, der dem Abstand von in einem Halter gehaltenen Temperaturwächtern entspricht. Hier ist von Vorteil, daß die zunächst nur ausgerichteten Schrumpfkappen jetzt so positioniert werden, daß sie unmittelbar auf Temperaturwächter aufgeschoben werden können, die in einem Halter gehalten werden. Die neue Vorrichtung ist damit in der Lage, ungeordnet zugeführte Schrumpfkappen für die weitere Verarbeitung so darzubieten, daß sie unmittelbar zu mehreren gleichzeitig auf Temperaturwächter aufgeschoben werden können. Diese zu mehreren in einem Halter angeordneten Temperaturwächter können dann so, wie es in den der Öffentlichkeit nicht zugänglichen Räumen der Anmelderin bereits bei von Hand aufgeschobenen Schrumpfkappen der Fall ist, einer Vorrichtung zum Aufschrumpfen zugeführt werden. Mit der neuen Vorrichtung entfällt also die bisher erforderliche Handarbeit.

Dabei ist es bevorzugt, wenn die Positioniereinrichtung eine Förderschnecke umfaßt, die an einer der beiden Rollen an deren unterem Ende angeordnet ist und einen spiralförmig verlaufenden Steg aufweist, der zum Teil in den Spalt hineinragt.

Auch diese Maßnahme ist konstruktiv von Vorteil, die Positioniereinrichtung wird nämlich dadurch gebildet, daß eine der beiden Rollen an ihrem unteren Ende mit einer Förderschnecke versehen wird, während die andere Rolle ihre zylindrische Form beibehält. Die zwischen den beiden Rollen ausgerichteten Schrumpfkappen gelangen bei ihrer Bewegung längs der Rollen schließlich an den Anfang der Förderschnecke, die eine Schrumpfkappe nach der anderen von der endlosen Reihe abnimmt und entsprechend der Steigung des Steges weiterbefördert, bis schließlich in jedem Gewindegang der Förderschnecke eine Schrumpfkappe positioniert ist. Die Abstände zwischen benachbarten Schrumpfkappen werden dabei durch den Gang, also die Steigung des Scheckengewindes bestimmt.

In einer Weiterbildung ist es dann bevorzugt, wenn für die Förderschnecke ein eigener Antrieb vorgesehen ist.

Hier ist von Vorteil, daß eine sehr einfache Ablaufsteuerung der neuen Vorrichtung möglich wird. Sobald nämlich jeder Gang der Förderschnecke mit einer Schrumpfkappe gefüllt ist, wird die Förderschnecke angehalten, so daß sie aus der an ihrem Anfang bereitgestellten Reihe von Schrumpfkappen zunächst keine weitere Schrumpfkappe abnimmt. Jetzt können als nächstes die Schrumpfkappen auf noch zu beschreibende Weise auf die parallel zueinander angeordneten Temperaturwächter aufgeschoben werden, bevor die Förderschnecke wieder in Bewegung gesetzt wird.

Selbstverständlich ist es auch möglich, die Förderschnecke zusammen mit der zugeordneten Rolle anzutreiben, dann ist es jedoch erforderlich, die positionierten Schrumpfkappen sehr schnell aus der Förderschnecke zu entnehmen, damit die nachfolgenden Schrumpfkappen bei ihrer Positionierung nicht behindert werden.

Allgemein ist es bevorzugt, wenn die Zuführeinrichtung einen Rundvibrator umfaßt, der die ungeordneten Schrumpfkappen aufnimmt und nacheinander über eine Linearführung den Rollen zuführt.

Hier ist von Vorteil, daß durch die Schüttelbewegung und -geschwindigkeit des Rundvibrators die Geschwindigkeit kontinuierlich eingestellt werden kann, mit der die Schrumpfkappen über die Linearführung auf die Rollen geführt werden. Es wäre zwar auch möglich, die Schrumpfkappen über eine Rutsche zuzuführen, dann ist es jedoch zur Steuerung des Flusses von Schrumpfkappen erforderlich, einen Schieber oder ähnliche Absperrelemente vorzusehen. Durch den Rundvibrator läßt sich jedoch auf technisch einfachste Weise ein kontinuierlicher, gezielter Zufluß von einzelnen Schrumpfkappen realisieren, die jedoch noch ungeordnet, also weder ausgerichtet noch positioniert sind.

Weiter ist es bevorzugt, wenn der Positioniereinrichtung ein Zwischenspeicher zugeordnet ist, in den die positionierten Schrumpfkappen überführt werden.

Auch diese Maßnahme ist konstruktiv von Vorteil, während nämlich die in den Zwischenspeicher überführten Schrumpfkappen jetzt auf die Temperaturwächter aufgeschoben werden, kann die Förderschnecke bereits neue Schrumpfkappen positionieren, so daß der Zwischenspeicher eine deutlich höhere Taktrate bei der neuen Vorrichtung ermöglicht.

Dabei ist es bevorzugt, wenn der Zwischenspeicher unter dem Spalt angeordnet ist und über dem Spalt ein Schieber vorgesehen ist, der die Schrumpfkappe durch den Spalt hindurch in den Zwischenspeicher stößt, wobei der Schieber vorzugsweise für jede positionierte Schrumpfkappe einen Stößel aufweist, der in die Schrumpfkappe an ihrem offenen Ende eingreift.

Auch diese Maßnahme ist sowohl konstruktiv als auch im Hinblick auf die Taktrate von Vorteil, denn die Schrumpfkappen müssen lediglich in einer kurzen Bewegung durch den Spalt hindurch nach unten in den Zwischenspeicher eingestoßen werden, was wegen der Elastizität des Schrumpfschlauchmaterials ohne weiteres möglich ist. Diese Stoßbewegung läßt sich innerhalb kürzester Zeit durchführen, so daß die Stillstandszeiten der Förderschnecke sehr gering ausgelegt werden können. Bei entsprechender Auslegung ist es sogar möglich, einen kontinuierlichen Betrieb der Förderschnecke aufrechtzuerhalten. Weil für jede Schrumpfkappe ein eigener Stößel vorgesehen ist, wird sichergestellt, daß jede Schrumpfkappe auf möglichst schonende Weise durch den Spalt hindurchgestoßen wird. Der Stößel greift nämlich innen in der Schrumpfkappe an dem unteren, spitzen Ende an, das bereits verschweißt oder verpreßt wurde, also eine gewisse Stabilität aufweist. Zwar wäre es auch möglich, mit dem Schieber direkt auf die Ränder der oberen, offenen Enden der Schrumpfkappen zuzugreifen, dies könnte jedoch dazu führen, daß die Ränder einknicken, so daß die Schrumpfkappen danach nicht mehr ohne weiteres auf die Temperaturwächter aufgeschoben werden könnten.

Ferner ist es bevorzugt, wenn der Zwischenspeicher für jede aufzunehmende Schrumpfkappe ein Durchgangsloch aufweist, in dem die Schrumpfkappe vorzugsweise klemmend gehalten wird, wobei der Zwischenspeicher vorzugsweise in eine Übergabeposition bewegbar ist, in der die Schrumpfkappen auf in einem Halter gehaltene Temperaturwächter aufschiebbar sind, wobei weiter vorzugsweise ein Steckschieber vorgesehen ist, durch den die Schrumpfkappen aus dem Zwischenspeicher heraus und auf die Temperaturwächter geschoben werden, der Zwischenspeicher ist dabei vorzugsweise um seine Längsachse verschwenkbar.

Hier ist von Vorteil, daß die von oben in den Zwischenspeicher eingeschobenen Schrumpfkappen von unten durch Stößel des Steckschiebers wieder herausgeschoben werden können. Diese Maßnahme ist also insbesondere konstruktiv von Vorteil, denn es ist lediglich ein um 90° schwenkbarer Zwischenspeicher erforderlich, aus dem nach dem Verschwenken durch einen von der Seite kommenden Steckschieber die von oben eingeschobenen Schrumpfkappen seitlich wieder herausgeschoben werden, wobei sie gleichzeitig auf die Temperaturwächter aufgesteckt werden, deren Halter vor dem Zwischenspeicher angeordnet ist. Ein weiterer Vorteil dieser Maßnahmen liegt darin, daß nur sehr wenige Verfahrensschritte erforderlich sind, um die Schrumpfkappen aus der Positionierung in der Förderschnecke über den Zwischenspeicher auf die Temperaturwächter zu bringen. Der weitere Vorteil liegt also darin, daß insgesamt eine hohe Taktrate erzielt werden kann.

Bei dem neuen Verfahren, das vorzugsweise auf der insoweit weitergebildeten Vorrichtung durchgeführt wird, ist der folgende, weitere Schritt bevorzugt:
c) Vereinzeln und Positionieren der ausgerichteten Schrumpfkappen in einer Positioniereinrichtung, vorzugsweise mit einer Förderschnecke.

Ferner ist der folgende Schritt bevorzugt:
d) Überführen der positionierten Schrumpfkappen in einen Zwischenspeicher.

Weiter ist der folgende Schritt bevorzugt:
e) Positionieren des Zwischenspeichers vor einem mit Temperaturwächtern bestückten Halter.

Weiterhin ist der Schritt bevorzugt:
f) Aufschieben der zwischengespeicherten Schrumpfkappen auf die Temperaturwächter.

Schließlich ist noch der Schritt bevorzugt:
g) Aufschrumpfen der aufgeschobenen Schrumpfkappen auf die Temperaturwächter.

Mit diesen einzelnen Verfahrensschritten sind die Vorteile verbunden, die oben bereits anhand der konkreten Ausgestaltung einer Vorrichtung erörtert wurden. Insgesamt liegen die Vorteile des neuen Verfahrens darin, daß die Schrumpfkappen zunächst vorzugsweise über die beiden gegensinnig drehenden Rollen ausgerichtet und dann vorzugsweise mittels einer Förderschnecke so positioniert werden, daß sie in einen Zwischenspeicher überführbar sind, so daß die Schritte des Ausrichtens und Positionierens unmittelbar weiter durchgeführt werden können, während jetzt die Schrumpfkappen aus dem dazu entsprechend positionierten Zwischenspeicher auf die Temperaturwächter aufgeschoben werden. Mit dem neuen Verfahren läßt sich also mit hoher Taktrate ein vollständig automatisches Aufstecken von ungeordnet zugeführten Schrumpfkappen auf Temperaturwächtern realisieren, wobei die so mit Schrumpfkappen bestückten Temperaturwächter dann in an sich bekannter Weise in einer entsprechenden Vorrichtung so erhitzt werden, daß die Schrumpfkappen aufschrumpfen.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine schematische Draufsicht auf die neue Vorrichtung zum Zuführen, Ausrichten und Positionieren von Schrumpfkappen für Temperaturwächter;
- Fig. 2: eine Vorderansicht der Vorrichtung aus Fig. 1, gesehen längs des Pfeiles II in Fig. 1; und
- Fig. 3: eine Seitenansicht der Vorrichtung aus Fig. 2, gesehen längs des Pfeiles III in Fig. 2.

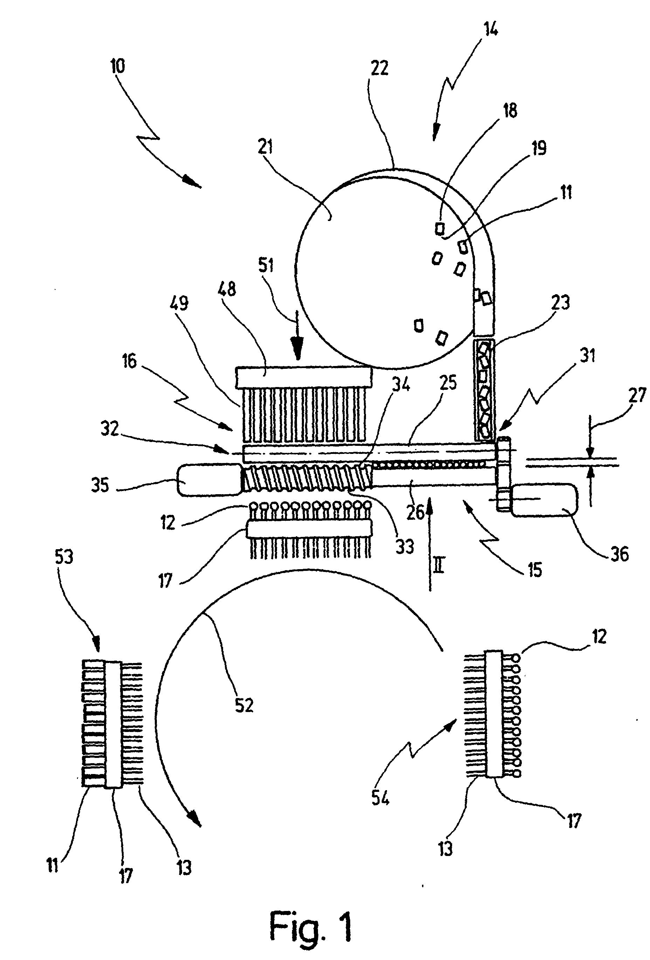

In Fig. 1 ist mit 10 eine Vorrichtung gezeigt, in der ungeordnet vorliegende Schrumpfkappen 11 für Temperaturwächter 12 mit Anschlußdrähten 13 automatisch zugeführt, ausgerichtet und positioniert werden.

Die Vorrichtung 10 umfaßt drei prinzipielle Stationen, nämlich eine Zuführeinrichtung 14 zum Zuführen der ungeordnet vorliegenden Schrumpfkappen 11 zu einer Ausrichtstrecke 15, in der die zugeführten Schrumpfkappen 11 so ausgerichtet werden, daß sie dicht an dicht hintereinander liegen. An die Ausrichtstrecke 15 schließt sich eine Positioniereinrichtung 16 an, in der die ausgerichteten Schrumpfkappen 11 vereinzelt und in einem bestimmten Abstand zueinander angeordnet werden, der dem Abstand von in einem Halter 17 gehaltenen Temperaturwächtern 12 entspricht, die mit ihren Anschlußdrähten 13 in dem Halter 17 gehalten werden, so daß die Gehäuse der Temperaturwächter 12 vor den Halter 17 vorstehen.

Die auf die Temperaturwächter 12 aufzuschiebenden Schrumpfkappen 11 bestehen aus kurzen Stücken eines Schrumpfschlauches, der an einem Ende verklebt, verpreßt oder verschweißt worden ist, so daß sich eine Art kegelförmiges Hütchen ergibt, das ein offenes Ende 18 sowie ein spitzes Ende 19 aufweist.

Aufgabe der Vorrichtung 10 ist es, die ungeordnet vorliegenden Schrumpfkappen 11 so zu positionieren, daß sie mit ihrem offenen Ende 18 voran auf die in den Haltern 17 nebeneinander angeordneten Temperaturwächter 12 aufgeschoben werden können.

Die Zuführeinrichtung 14 umfaßt einen Rundvibrator 21, in den die als Schüttgut vorliegenden Schrumpfkappen 11 zunächst ungeordnet eingeschüttet werden. Aus dem Rundvibrator laufen die Schrumpfkappen 11 dann über eine Auflaufschräge 22 auf eine Linearführung 23, über die sie dann der Ausrichtstrecke 15 zugeführt werden.

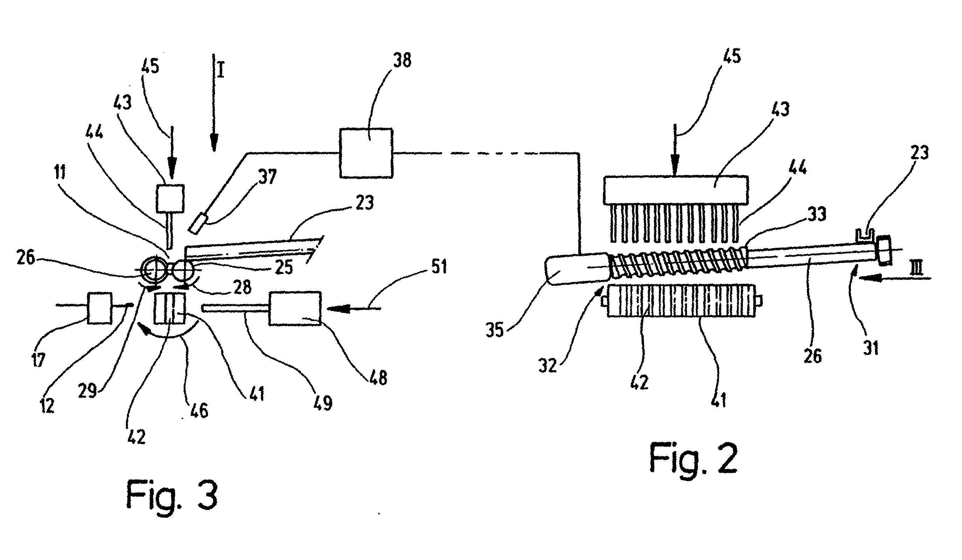

Die Ausrichtstrecke 15 umfaßt zwei parallel zueinander angeordnete Rollen 25, 26, die zwischen sich einen Spalt 27 ausbilden, wie dies auch in Fig. 3 zu sehen ist. Die beiden Rollen 25, 26 drehen sich gegensinnig zueinander derart, daß sie sozusagen von unten in den Spalt 27 hineinlaufen. Die Drehrichtungen der Rollen 25 und 26 sind in Fig. 3 durch Pfeile 28 und 29 angedeutet.

In Fig. 2 ist noch zu erkennen, daß die Rollen 25, 26 von ihrem oberen Ende 31 geneigt zu ihrem unteren Ende 32 verlaufen.

Zurückkehrend zu Fig. 1 ist zu erkennen, daß die Linearführung 23 die ungeordneten Schrumpfkappen 11 den Rollen 25, 26 an deren oberem Ende 31 derart zuführt, daß sie einzeln nacheinander in den Bereich des Spaltes 27 fallen. Dieser Spalt 27 ist so bemessen, daß die Schrumpfkappen 11 nicht von sich aus hindurchfallen, mit ihrem spitzen Ende 19 jedoch hineinpassen, wie dies in Fig. 3 zu erkennen ist.

Im Bereich des unteren Endes 32 ist die bereits erwähnte Positioniereinrichtung 16 ausgebildet, die eine Förderschnecke 33 umfaßt, die in Verlängerung der Rolle 26 ausgebildet ist. Die Förderschnecke 33 ragt mit ihrem spiralförmig verlaufenden Steg 34 in den Spalt 27 hinein.

Während es möglich ist, die Förderschnecke 33 als Teil der Rolle 26 auszubilden, ist die Förderschnecke 33 in dem in Fig. 1 gezeigten Ausführungsbeispiel unabhängig von der Rolle 26 drehbar, so daß für die Förderschnecke 33 ein eigener Antrieb 35 vorgesehen ist. Bei 36 ist noch ein Antrieb angedeutet, über den die Rollen 25, 26 gegensinnig zueinander gedreht werden.

In Fig. 3 ist bei 37 eine Meßvorrichtung gezeigt, die von einer Ablaufsteuerung 38 ausgelesen wird, die u.a. den Antrieb 35 steuert.

Die insoweit beschriebene Ausrichtstrecke 15 sowie Positioniereinrichtung 16 arbeitet derart, daß die am oberen Ende 31 in den Spalt 27 fallenden Schrumpfkappen 11 durch die Drehbewegungen 28, 29 so lange immer wieder hochgeschleudert werden, bis sie mit ihrem spitzen Ende nach unten in dem Spalt 27 zu liegen kommen. Wegen der geneigten Anordnung der Rollen 25, 26 wandern die Schrumpfkappen 11 in Fig. 1 nach links, bis sie auf die Förderschnecke 33 treffen. Dreht sich die Förderschnecke 33, so nimmt sie mit ihrem Steg 34 eine Schrumpfkappe 11 nach der anderen aus der aus dicht an dicht liegenden Schrumpfkappen 11 bestehenden Reihe ab und transportiert diese entsprechend dem Gewindegang des Steges 34 in Fig. 1 nach links. Sobald sämtliche Gänge der Förderschnecke 33 mit Schrumpfkappen 11 bestückt sind, wird dies von der Meßvorrichtung 37 erkannt und an die Ablaufsteuerung 38 gemeldet, die daraufhin den Antrieb 35 stoppt. In diesem Verfahrenszustand liegen zwischen der stehenden Förderschnecke 33 sowie der sich weiterdrehenden Rolle 25 so viele positionierte Hütchen vor, wie die Förderschnecke 33 Gewindegänge aufweist. In dem in Fig. 1 gezeigten Ausführungsbeispiel sind dies zwölf Schrumpfkappen 11.

Diese Schrumpfkappen 11 werden jetzt in einen unter dem Spalt 27 angeordneten Zwischenspeicher 41 überführt, in dem Durchgangslöcher 42 zur Aufnahme der Schrumpfkappen 11 vorgesehen sind. Zur Überführung der Schrumpfkappen 11 ist oberhalb des Spaltes 27 ein Schieber 43 vorgesehen, der für jede positionierte Schrumpfkappe 11 einen Stößel 44 aufweist. Der Schieber 43 wird längs des Pfeiles 45 in den Figuren 2 und 3 nach unten bewegt, so daß die Stößel 44 von oben in die Öffnungen 18 der Schrumpfkappen 11 eingreifen und diese durch den Spalt 27 hindurch in die Durchgangslöcher 42 stoßen. Sobald der Schieber 43 zurückgezogen wurde, setzt die Ablaufsteuerung 38 den Antrieb 35 wieder in Betrieb, so daß die Förderschnecke 33 neue Schrumpfkappen 11 in Fig. 2 nach links befördert und somit positioniert.

Der Zwischenspeicher 41 wird jetzt längs des Pfeiles 46 in Fig. 3 gekippt, so daß die Durchgangslöcher 42 jetzt in Fig. 3 waagrecht verlaufen. Der Zwischenspeicher 41 befindet sich jetzt in seiner Übergabeposition, in der die in den Durchgangslöchern 42 eingeklemmten Schrumpfkappen 11 auf die Temperaturwächter 12 aufgeschoben werden können, die in dem Halter 17 angeordnet sind.

Hierfür ist ein Steckschieber 48 vorgesehen, der für jedes Durchgangsloch 42 einen Stößel 49 aufweist. Der Steckschieber 48 führt jetzt einen Hub 51 durch und schiebt dabei die zuvor in die Durchgangslöcher 42 eingeschobenen Schrumpfkappen 11 in Fig. 3 nach links bzw. in Fig. 1 nach unten auf die Temperaturwächter 12 auf. Sobald der Steckschieber 48 zurückgezogen wurde, wird der Zwischenspeicher 41 wieder in seine Aufnahmelage geschwenkt, in der die Durchgangslöcher 42 senkrecht zu dem Spalt 27 verlaufen.

Der Halter 17, in dem die nun mit Schrumpfkappen 11 bestückten Temperaturwächter 12 gehalten sind, führt nun eine Drehung 52 zu einer Aufschrumpfstation 53 durch, wo durch eine entsprechende Hitzebehandlung die Schrumpfkappen 11 auf die Temperaturwächter 12 aufgeschrumpft werden. Gleichzeitig wird von einer Vorratsposition 54 ein neuer Halter 17 mit Temperaturwächtern 12 vor die Förderschnecke 33 bewegt.

## Patentansprüche

1. Vorrichtung, in der ungeordnet vorliegende Schrumpfkappen (11) für Temperaturwächter (12) automatisch zugeführt und ausgerichtet werden, mit
einer Zuführeinrichtung (14) zum Zuführen ungeordneter Schrumpfkappen (11) zu einer Ausrichtstrecke (15), in der die zugeführten Schrumpfkappen (11) so ausgerichtet werden, daß sie dicht an dicht hintereinander liegen und mit ihren spitzen Enden (19) in eine Richtung zeigen, wobei die Ausrichtstrecke (15) zwei parallel zueinander angeordnete und zwischen sich einen Spalt (27) ausbildende Rollen (25, 26) umfaßt, die sich gegensinnig von unten in den Spalt (27) hineinlaufend drehen, der so bemessen ist, daß die Schrumpfkappen (27) nicht von sich aus hindurchfallen, mit ihrem spitzen Ende (19) jedoch hineinpassen, und die Zuführeinrichtung (14) die ungeordneten Schrumpfkappen (11) den Rollen (25, 26) an ihrem einen Ende (31) von oben im Bereich des Spaltes (27) zuführt.

2. Vorrichtung nach Anspruch 1, **dadurch gekennzeichnet, daß** die Rollen (25, 26) zwischen ihrem einen, dem oberen und ihrem unteren Ende (31, 32) geneigt verlaufen.

3. Vorrichtung nach Anspruch 1 oder 2, **dadurch gekennzeichnet, daß** sich an die Ausrichtstrecke (15) eine Positioniereinrichtung (16) anschließt, in der die ausgerichteten Schrumpfkappen (11) vereinzelt und in einem bestimmten Abstand zueinander angeordnet werden, der dem Abstand von in einem Halter (17) gehaltenen Temperaturwächtern (12) entspricht.

4. Vorrichtung nach Anspruch 3, **dadurch gekennzeichnet, daß** die Positioniereinrichtung (16) eine Förderschnecke (33) umfaßt, die an einer der beiden Rollen (26) an deren unterem Ende (32) angeordnet ist und einen spiralförmig verlaufenden Steg (34) aufweist, der zum Teil in den Spalt (27) hineinragt.

5. Vorrichtung nach Anspruch 4, **dadurch gekennzeichnet, daß** für die Förderschnecke (33) ein eigener Antrieb (35) vorgesehen ist.

6. Vorrichtung nach einem der vorhergehenden Ansprüche, **dadurch gekennzeichnet, daß** die Zuführeinrichtung (14) einen Rundvibrator (21) umfaßt, der die ungeordneten Schrumpfkappen (11) aufnimmt und nacheinander über eine Linearführung (23) den Rollen (25, 26) zuführt.

7. Vorrichtung nach einem der Ansprüche 3 bis 6, **dadurch gekennzeichnet, daß** der Positioniereinrichtung (16) ein Zwischenspeicher (41) zugeordnet ist, in den die positionierten Schrumpfkappen (11) überführt werden.

8. Vorrichtung nach Anspruch 7, **dadurch gekennzeichnet, daß** der Zwischenspeicher (41) unter dem Spalt (27) angeordnet ist und über dem Spalt (27) ein Schieber (43) vorgesehen ist, der die Schrumpfkappen (11) durch den Spalt (27) hindurch in den Zwischenspeicher (41) stößt.

9. Vorrichtung nach Anspruch 8, **dadurch gekennzeichnet, daß** der Schieber (43) für jede positionierte Schrumpfkappe (11) einen Stößel (44) aufweist, der in die Schrumpfkappe (11) an ihrem offenen Ende (18) eingreift.

10. Vorrichtung nach einem der Ansprüche 7 bis 9, **dadurch gekennzeichnet, daß** der Zwischenspeicher (41) für jede aufzunehmende Schrumpfkappe (11) ein Durchgangsloch (42) aufweist, in dem eine Schrumpfkappe (11) gehalten wird.

11. Vorrichtung nach einem der Ansprüche 7 bis 10, **dadurch gekennzeichnet, daß** der Zwischenspeicher (41) in eine Übergabeposition bewegbar ist, in der die Schrumpfkappen (11) auf in einem Halter (17) gehaltene Temperaturwächter (12) aufschiebbar sind.

12. Vorrichtung nach Anspruch 11, **dadurch gekennzeichnet, daß** ein Steckschieber (48) vorgesehen ist, durch den die Schrumpfkappen (11) aus dem Zwischenspeicher (41) heraus und auf die Temperaturwächter (12) geschoben werden.

13. Vorrichtung nach Anspruch 11 oder 12, **dadurch gekennzeichnet, daß** der Zwischenspeicher (41) um seine Längsachse verschwenkbar ist.

14. Verfahren, bei dem ungeordnet vorliegende Schrumpfkappen (11) für Temperaturwächter (12) automatisch zugeführt und ausgerichtet werden, **gekennzeichnet durch** die Schritte:
a) Zuführen der noch ungeordneten Schrumpfkappen (11) zu einer Ausrichtstrecke (15), und
b) Ausrichten der Schrumpfkappen (11) in der Ausrichtstrecke (15), so daß sie dicht an dicht hintereinander liegen und mit ihren spitzen Enden (19) in eine Richtung zeigen, wobei die Schrumpfkappen (11) an einem Ende (31) von zwei parallel zueinander angeordneten und zwischen sich einen Spalt (27) ausbildenden Rollen (25, 26) geführt werden, der so bemessen ist, daß die Schrumpfkappen (11) nicht von sich aus hindurchfallen, mit ihren spitzen Enden (19) jedoch hineinpassen, und wobei die Rollen (25, 26) gegensinnig von unten in den Spalt (27) hineinlaufend gedreht werden.

15. Verfahren nach Anspruch 14, **gekennzeichnet durch** den weiteren Schritt:
c) Vereinzeln und Positionieren der ausgerichteten Schrumpfkappen (11) in einer Positioniereinrichtung (16), vorzugsweise mit einer Förderschnecke (33).

16. Verfahren nach Anspruch 14 oder 15, **gekennzeichnet durch** den weiteren Schritt:
d) Überführen der positionierten Schrumpfkappen (11) in einen Zwischenspeicher (41).

17. Verfahren nach einem der Ansprüche 14 bis 16, **gekennzeichnet durch** den weiteren Schritt:
e) Positionieren des Zwischenspeichers (41) vor einem mit Temperaturwächtern (12) bestückten Halter (17).

18. Verfahren nach einem der Ansprüche 14 bis 17, **gekennzeichnet durch** den weiteren Schritt:
f) Aufschieben der zwischengespeicherten Schrumpfkappen (11) auf die Temperaturwächter (12).

19. Verfahren nach einem der Ansprüche 14 bis 18, **gekennzeichnet durch** den weiteren Schritt:
g) Aufschrumpfen der aufgeschobenen Schrumpfkappen (11) auf die Temperaturwächter (12).

## Claims

1. Device in which shrinkable caps (11) for temperature-controllers (12), which caps are present in a disordered manner, are automatically fed in and aligned, the said device having an infeed apparatus (14) for feeding disordered shrinkable caps (11) to an aligning section (15) in which the shrinkable caps (11) fed in are aligned in such a way that they lie close together, one behind the other, and point in one direction with their pointed ends (19), wherein the aligning section (15) comprises two rollers (25, 26) which are disposed parallel to one another and form a gap (27) between them and which are rotated in opposite directions so as to run into the gap (27) from below, which gap is so dimensioned that the shrinkable caps (11) do not fall through spontaneously but fit in with their pointed end (19), and the infeed apparatus (14) feeds the disordered shrinkable caps (11) to the rollers (25, 26), at one end (31) of the latter, from above in the region of the gap (27).

2. Device according to claim 1, **characterised in that** the rollers (25, 26) extend in an inclined manner between one of their ends, the upper one, and their lower end (31, 32).

3. Device according to claim 1 or 2, **characterised in that** the aligning section (15) is adjoined by a positioning apparatus (16) in which the aligned shrinkable caps (11) are isolated and disposed at a certain distance from one another which corresponds to the distance between temperature-controllers (12) which are held in a holder (17).

4. Device according to claim 3, **characterised in that** the positioning apparatus (16) comprises a conveyer worm (33) which is disposed on one of the two rollers (26) at its lower end (32) and has a spirally extending web (34) which partly protrudes into the gap (27).

5. Device according to claim 4, **characterised in that** the conveyer worm (33) is provided with a drive (35) of its own.

6. Device according to one of the preceding claims, **characterised in that** the infeed apparatus (14) comprises a circular vibrator (21) which receives the disordered shrinkable caps (11) and feeds them, one after another, to the rollers (25, 26) via a linear guide (23).

7. Device according to one of claims 3 to 6, **characterised in that** an intermediate storage device (41), into which the positioned shrinkable caps (11) are transferred, is associated with the positioning apparatus (16).

8. Device according to claim 7, **characterised in that** the intermediate storage device (41) is disposed under the gap (27) and a pusher (43), which thrusts the shrinkable caps (11) through the gap (27) and into the intermediate storage device (41), is provided above the said gap (27).

9. Device according to claim 8, **characterised in that** the pusher (43) has a ram (44) for each positioned shrinkable cap (11), which ram engages in the said shrinkable cap (11) at the open end (18) of the latter.

10. Device according to one of claims 7 to 9, **characterised in that** the intermediate storage device (41) has, for each shrinkable cap (11) which is to be received, a through-hole (42) in which a shrinkable cap (11) is held.

11. Device according to one of claims 7 to 10, **characterised in that** the intermediate storage device (41) can be moved into a delivery position in which the shrinkable caps (11) can be pushed onto temperature-controllers (12) held in a holder (17).

12. Device according to claim 11, **characterised in that** a slip-in pusher (48) is provided, by which the shrinkable caps (11) are pushed out of the intermediate storage device (41) and onto the temperature-controllers (12).

13. Device according to claim 11 or 12, **characterised in that** the intermediate storage device (41) can be swivelled about its longitudinal axis.

14. Method in which shrinkable caps (11) for temperature-controllers (12), which caps are present in a disordered manner, are automatically fed in and aligned, the said method being **characterised by** the following steps:
a) the feeding of the shrinkable caps (11), which are still disordered, to an aligning section (15), and
b) the aligning of the shrinkable caps (11) in the aligning section (15), so that they lie close together, one behind the other, and point in one direction with their pointed ends (19), wherein the shrinkable caps (11) are guided, at one end (31), by two rollers (25, 26) which are disposed parallel to one another and form, between them, a gap (27) which is so dimensioned that the shrinkable caps (11) do not fall through spontaneously but fit in with their pointed ends (19), and wherein the rollers (25, 26) are rotated in opposite directions so as to run into the gap (27) from below.

15. Method according to claim 14, **characterised by** the following additional step:
c) the isolating and positioning of the aligned shrinkable caps (11) in a positioning apparatus (16), preferably with a conveyer worm (33).

16. Method according to claim 14 or 15, **characterised by** the following additional step:
d) the transferring of the positioned shrinkable caps (11) into an intermediate storage device (41).

17. Method according to one of claims 14 to 16, **characterised by** the following additional step:
e) the positioning of the intermediate storage device (41) in front of a holder (17) equipped with temperature-controllers (12).

18. Method according to one of claims 14 to 17, **characterised by** the following additional step:
f) the pushing of the intermediately stored shrinkable caps (11) onto the temperature-controllers (12).

19. Method according to one of claims 14 to 18, **characterised by** the following additional step:
g) the shrinking of the pushed-on shrinkable caps (11) onto the temperature-controllers (12).

## Revendications

1. Dispositif dans lequel des capuchons rétractables (11) non ordonnés pour contrôleurs de température (12) sont automatiquement acheminés et orientés, comportant
un dispositif d'amenée (14) pour l'amenée de capuchons rétractables (11) non ordonnés à un parcours d'orientation (15) dans lequel les capuchons rétractables (11) amenés sont orientés de manière à se trouver serrés l'un derrière l'autre et à être dirigés dans une direction par leurs extrémités pointues (19), le parcours d'orientation (15) comportant deux rouleaux (25, 26) disposés parallèlement l'un à l'autre et formant entre eux une fente (27), lesquels rouleaux tournent en sens contraire depuis le bas en pénétrant à l'intérieur de la fente (27) qui est telle que les capuchons rétractables (11) ne tombent pas d'eux-mêmes à travers celle-ci, mais s'ajustent à l'intérieur par leur extrémité pointue (19), et le dispositif d'amenée (14) amène les capuchons rétractables (11) non ordonnés aux rouleaux (25, 26) à l'une (31) de leurs extrémités, depuis le haut, dans la zone de la fente (27).

2. Dispositif selon la revendication 1, **caractérisé en ce que** les rouleaux (25, 26) s'étendent de manière inclinée entre l'une de leurs extrémités, à savoir l'extrémité supérieure et leur extrémité inférieure (31, 32).

3. Dispositif selon la revendication 1 ou 2, **caractérisé en ce qu'**au parcours d'orientation (15) fait suite un dispositif de positionnement (16) dans lequel les capuchons rétractables (11) orientés sont séparés et disposés à une distance déterminée les uns des autres, laquelle correspond à l'écartement de contrôleurs de température (12) maintenus dans un support (17).

4. Dispositif selon la revendication 3, **caractérisé en ce que** le dispositif de positionnement (16) comprend une vis sans fin de transport (33) qui est disposée sur l'un des deux rouleaux (26), à son extrémité inférieure (32), et comporte une nervure (34) s'étendant en spirale qui pénètre en partie à l'intérieur de la fente (27).

5. Dispositif selon la revendication 4, **caractérisé en ce qu'**il est prévu un dispositif d'entraînement (35) propre à la vis sans fin de transport (33).

6. Dispositif selon l'une des revendications précédentes, **caractérisé en ce que** le dispositif d'amenée (14) comprend un vibreur circulaire (21) qui reprend les capuchons rétractables (11) non ordonnés et les amène l'un après l'autre aux rouleaux (25, 26), à travers un dispositif de guidage linéaire (23).

7. Dispositif selon l'une des revendications 3 à 6, **caractérisé en ce qu'**au dispositif de positionnement (16) est associé un stockeur intermédiaire (41) dans lequel sont transférés les capuchons rétractables (11) positionnés.

8. Dispositif selon la revendication 7, **caractérisé en ce que** le stockeur intermédiaire (41) est disposé sous la fente (27) et **en ce qu'**au-dessus de la fente (27) est prévu un poussoir (43) qui pousse les capuchons rétractables (11), à travers la fente (27), dans le stockeur intermédiaire (41).

9. Dispositif selon la revendication 8, **caractérisé en ce que** le poussoir (43) comporte, pour chaque capuchon rétractable (11) positionné, un poinçon (44) qui s'engage dans le capuchon rétractable (11), à son extrémité ouverte (18).

10. Dispositif selon l'une des revendications 7 à 9, **caractérisé en ce que** le stockeur intermédiaire (41) présente, pour chaque capuchon rétractable (11) à recevoir, un trou traversant (42) dans lequel est maintenu un capuchon rétractable (11).

11. Dispositif selon l'une des revendications 7 à 10, **caractérisé en ce que** le stockeur intermédiaire (41) est déplaçable dans une position de transfert dans laquelle les capuchons rétractables (11) peuvent être enfilés sur un contrôleur de température (12) maintenu dans un support (17).

12. Dispositif selon la revendication 11, **caractérisé en ce qu'**il est prévu un poussoir à enfichage (48) par lequel les capuchons rétractables (11) sont poussés à l'extérieur du stockeur intermédiaire (41) et sur les contrôleurs de température (12).

13. Dispositif selon la revendication 11 ou 12, **caractérisé en ce que** le stockeur intermédiaire (41) peut pivoter autour de son axe longitudinal.

14. Procédé dans lequel des capuchons rétractables (11) non ordonnés pour contrôleurs de température (12) sont automatiquement acheminés et orientés, **caractérisé par** les étapes suivantes :
a) amenée des capuchons rétractables (11) encore non ordonnés vers un parcours d'orientation (15), et
b) orientation des capuchons rétractables (11) dans le parcours d'orientation (15), de manière qu'ils se trouvent serrés l'un derrière l'autre et soient dirigés dans une direction, par leurs extrémités pointues (19), les capuchons rétractables (11) étant guidés à une extrémité (31) par deux rouleaux (25, 26) disposés parallèlement l'un à l'autre et formant entre eux une fente (27) qui est telle que les capuchons rétractables (11) ne tombent pas d'eux-mêmes à travers celle-ci, mais s'ajustent à l'intérieur par leurs extrémités pointues (19), et les rouleaux (25, 26) tournant en sens contraire et pénétrant depuis le bas dans la fente (27).

15. Procédé selon la revendication 14, **caractérisé par** l'étape complémentaire suivante :
c) séparation et positionnement des capuchons rétractables (11) orientés dans un dispositif de positionnement (16), comportant de préférence une vis sans fin de transport (33).

16. Procédé selon la revendication 14 ou 15, **caractérisé par** l'étape complémentaire suivante :
d) transfert des capuchons rétractables (11) positionnés dans un stockeur intermédiaire (41).

17. Procédé selon l'une des revendications 14 à 16, **caractérisé par** l'étape complémentaire suivante :
e) positionnement du stockeur intermédiaire (41) devant un support (17) équipé de contrôleurs de température (12).

18. Procédé selon l'une des revendications 14 à 17, **caractérisé par** l'étape complémentaire suivante :
f) enfilage des capuchons rétractables (11) stockés de manière intermédiaire sur les contrôleurs de température (12).

19. Procédé selon l'une des revendications 14 à 18, **caractérisé par** l'étape complémentaire suivante :
g) rétraction des capuchons rétractables (11) enfilés sur les contrôleurs de température (12).
